# EUROPÄISCHE PATENTSCHRIFT

(11) **EP 2 096 335 B1**
(45) Veröffentlichungstag und Bekanntmachung des Hinweises auf die Patenterteilung: **05.10.2011**
(21) Anmeldenummer: 08003569.4
(22) Anmeldetag: 27.02.2008
(51) Int. Cl.: F16H 63/30

(54) **Getriebe**
Gearbox
Engrenage

(43) Veröffentlichungstag der Anmeldung: 02.09.2009
(73) Patentinhaber: HOERBIGER SynchronTechnik GmbH & Co. KG, 71720 Oberstenfeld (DE)
(72) Erfinder: Campara, Ramo, 85080 Gaimersheim (DE); Weissinger, Daniel, 71720 Oberstenfeld (DE)
(74) Vertreter: Kitzhofer, Thomas

(56) Entgegenhaltungen:
- EP-A- 1 422 450
- DE-A1- 19 512 642
- DE-U1- 20 110 302
- US-A- 667 782

## Beschreibung

Die Druckschrift EP 1 422 450 wird als nächster Stand der Technik angesehen und offenbart die Merkmale des Oberbegriffs des Anspruchs 1. Die Erfindung betrifft ein Getriebe gemäß dem Oberbegriff des Anspruches 1.

Bekannte Getriebe, welche auf das Prinzip des Schaltens aus einer Welle zurückgehen, werden im Bereich der Motorrad-Getriebe-Entwicklung verwendet. Konkret ist in diesem Bereich das sog. "Zieh-Keil-Getriebe" bekannt, das mechanisch betätigt wird und das keine Möglichkeit hat, die Gänge zu synchronisieren. Da dieses Getriebe ferner keine hohen Drehmomente übertragen kann, findet es insbesondere im PKW-oder LKW-Bereich keine Anwendung.

Es ist daher Aufgabe der vorliegenden Erfindung, ein Getriebe der im Oberbegriff des Anspruches 1 genannten Art zu schaffen, das bei Reduzierung des erforderlichen Einbauraums und des Getriebegewichtes die Möglichkeit ergibt, auch hohe Drehmomente zu übertragen.

Die Lösung dieser Aufgabe erfolgt durch die Merkmale des Anspruchs 1.

Erfindungsgemäß wird ein hydraulisches Schaltgetriebe geschaffen, das Ölbohrungen in der Antriebswelle aufweist, die das Schaltsystem mit Hydraulikflüssigkeit versorgen. Anhand von unabhängig angeordneten Ölbohrungen können die Gänge unabhängig voneinander geschaltet werden.

Im Einzelnen erfolgt ein Schaltvorgang wie folgt:

Anhand der Motordrehzahl gibt ein Steuergerät dem Hydrauliksystem des Schaltsystems ein Signal, welcher Gang geschaltet werden soll. Dementsprechend baut das Schaltsystem einen notwendigen Öldruck im Gangkanal auf. Hierdurch wird das Schaltsystem des ausgewählten Gangrades betätigt. Durch den Öldruck wird das Synchronsystem zunächst in eine Vor- und danach in eine Sperrsynchronphase gebracht. In dem Moment, in dem der Gleichlauf zwischen der Abtriebswelle und dem Gangrad zustande kommt, kann geschaltet werden.

Um Gleichlauf während des Schaltvorgangs zwischen der Antriebswelle und dem Schaltrad zu schaffen, ist das Schaltrad mit einer Synchroneinheit versehen. Hierzu sind die Synchronringe jeweils mit einem Reibbelag versehen. Die Synchronringe besitzen Aussparungen mit Sperrflächen, die einen bestimmten Sperrwinkel haben. In diesen Aussparungen befinden sich auch die Schaltelemente, die im nichtgeschalteten Zustand in die Antriebswelle zurückgezogen werden. Die Schaltelemente sind mit einer Feder-Kugel-Anordnung versehen, die dazu dient, die beiden Synchronringe am Anfang des Schaltvorganges in Sperrstellung zu bringen.

Durch Abfahren der Kontur in den Synchronringen wird beim Herausdrücken der Schaltelemente eine gewisse Vorsynchronkraft auf die beiden Synchronringe ausgeübt. Dadurch wandern diese in axiale Richtung gegen die konusförmigen Wandungen des Schaltrades. Die Synchronringe werden dadurch mitgenommen und erreichen die Sperrstellung. Die Sperrflächen liegen dadurch über den Schaltelementen, wodurch beim weiteren Herausfahren und Auftreffen auf den Sperrflächen eine Kraftkomponente sowohl in axialer als auch in radialer Richtung erzeugt wird. Die Winkel der Sperrflächen sind dabei vorzugsweise so gewählt, dass das erzeugte Reibmoment, hervorgerufen durch Abbremsen des Radsatzses, größer ist als das entstehende Verdrehmoment durch die radiale Komponente an den Sperrflächen. Sobald Gleichlauf zwischen dem Schaltrad und der Antriebswelle herrscht, bricht das Reibmoment am Schaltrad zusammen, so dass nur noch das Verdrehmoment an den Synchronringen wirkt. Die Schaltelemente verdrehen den Radsatz dabei so, dass ein Durchschalten zwischen den beiden Synchronringen möglich wird.

Als letzter Schritt rasten die Schaltelemente in die Aussparungen des Schaltrades ein und stellen damit eine feste Verbindung zwischen Antriebs- und Abtriebswelle her. Der Gang ist damit eingelegt.

Der Öldruck im geschalteten Gang wird solange aufrechterhalten, wie in dem entsprechenden Gang gefahren wird.

In die Neutrallage wird das Schaltsystem durch das Abfallen des Öldrucks und durch eine Rückführung des Schaltelements mit Hilfe einer Rückstellfeder gebracht.

Zu den besonderen Vorteilen des erfindungsgemäßen Getriebes zählt eine erhebliche Gewichts- und Bauraumreduzierung. Insbesondere kann durch das erfindungsgemäße Getriebekonzept eine Gewichtsersparnis von ca. 30 % gegenüber herkömmlichen Getrieben erreicht werden.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung von Ausführungsbeispielen anhand der Zeichnung. Darin zeigt:
- Fig. 1: eine schematisch vereinfachte Darstellung eines erfindungsgemäßen Getriebes,
- Fig. 2: eine teilweise geschnittene Darstellung des Getriebes gemäß Fig. 1,
- Fig. 3: die in Fig. 1 mit "X" bezeichnete Einzelheit in vergrößerter Darstellung,
- Fig. 4: eine perspektivische Darstellung der Abtriebs- bzw. Schaltwelle des erfindungsgemäßen Getriebes,
- Fig. 5: eine perspektivische Darstellung eines Synchronrings des erfindungsgemäßen Getriebes,
- Fig. 6: eine perspektivische Darstellung eines Schaltrades des erfindungsgemäßen Getriebes, und
- Fig. 7A-D: Synchron- und Schaltvorgang des erfindungsgemäßen Getriebes.

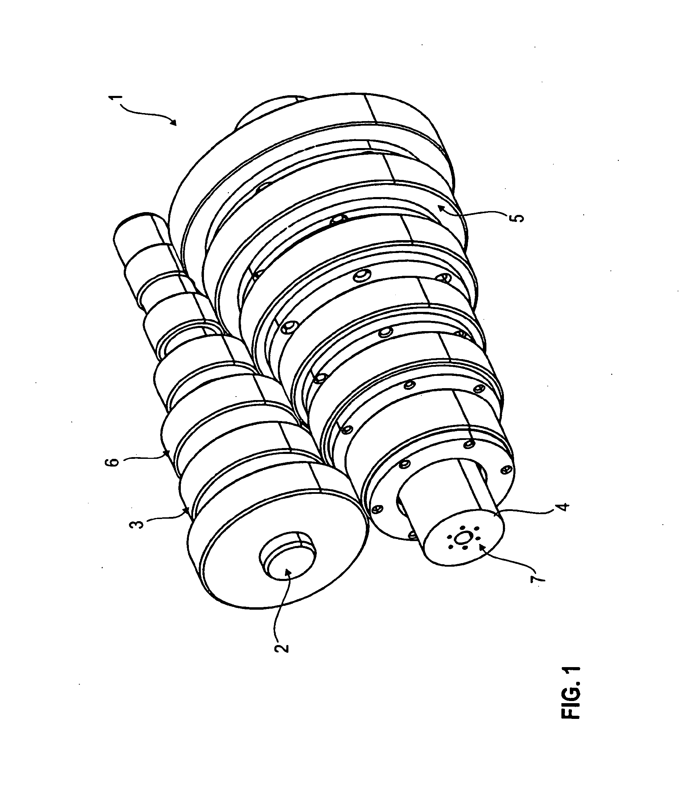

In Fig. 1 ist in vereinfachter Darstellung ein erfindungsgemäßes Getriebe 1 anhand seiner Antriebswelle 2 mit einem Satz von Antriebsrädern 3 und seiner Abtriebswelle 4 mit einem entsprechenden Satz von Schalträdern bzw. Losrädern 5 dargestellt. Alle weiteren Einzelheiten des erfindungsgemäßen Getriebes 1 sind in Fig. 1 und den nachfolgenden Figuren weggelassen, da diese zwar, wie auch bei anderen Getrieben, natürlich vorgesehen sind, für die Erläuterung der Prinzipien vorliegender Erfindung jedoch nicht erforderlich sind.

Der Antriebsrädersatz 3 und der Schaltradsatz 5 bilden jeweils Radpaarungen, von denen in Fig. 1 eine Radpaarung repräsentativ für sämtliche Paarungen, mit der Bezugsziffer 6 gekennzeichnet ist. Die jeweiligen Radpaarungen stellen den jeweils zu schaltenden Gang des Getriebes 1 dar.

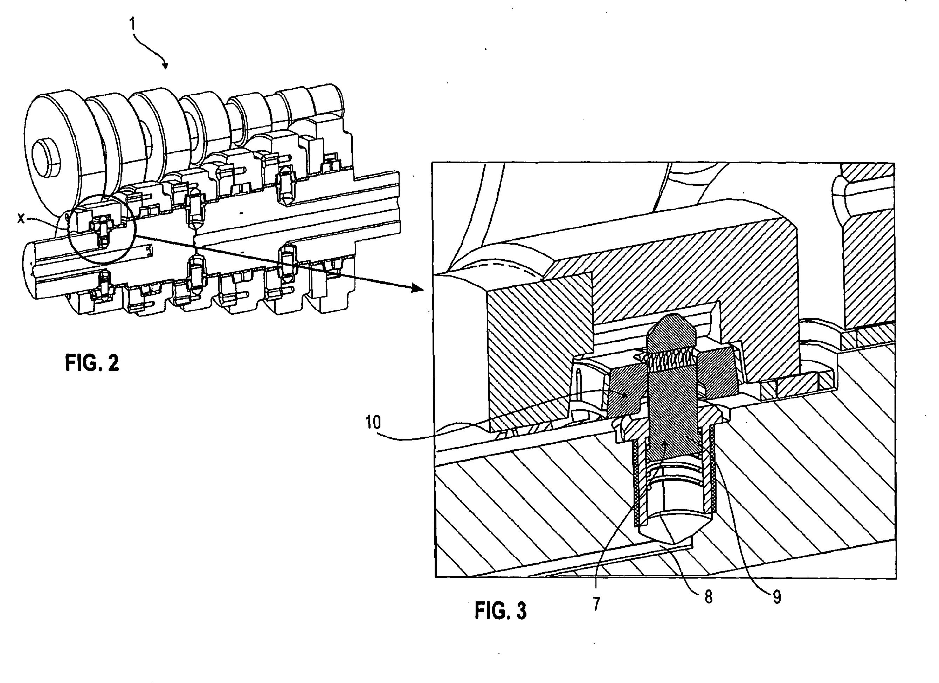

Zur wahlweisen Schaltung der Radpaarung 6, wie dies eingangs im Einzelnen erläutert wurde, ist ein Schaltsystem 7 vorgesehen, das im Einzelnen insbesondere anhand der Fig. 2-4 sowie 7A-7D deutlich wird.

Das Schaltsystem 7 weist eine der Gangzahl entsprechende Anzahl von Hydraulik- bzw. Ölkanälen auf, von denen in den

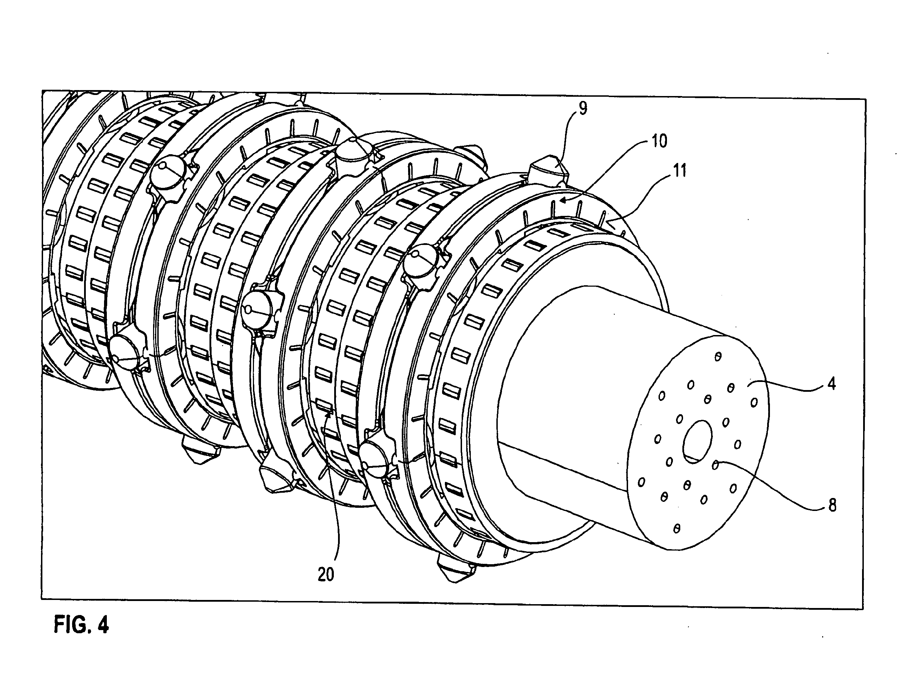

Fig. 3 und 4 ein Hydraulikkanal repräsentativ für sämtliche Kanäle mit der Bezugsziffer 8 gekennzeichnet ist.

Die Hydraulikkanäle 8 verlaufen in Längsrichtung der Abtriebswelle 4.

Das Schaltsystem 7 weist ferner pro Radpaarung zumindest ein Schaltelement 9, vorzugsweise jedoch sechs gleichmäßig um den Umfang der Abtriebswelle 4 verteilte Schaltelemente 9 auf, die mittels einer Rückstellfeder 17 in die Neutralstellung vorgespannt sind. Ferner stehen die Schaltelemente 9 mit dem jeweils zugeordneten Hydraulikkanal 8 in Strömungsverbindung, so dass bei Beschickung des jeweiligen Hydraulikkanals 8 mit Hydraulikflüssigkeit das Schaltelement 9 von der Neutralstellung in eine Schaltstellung überführt werden kann.

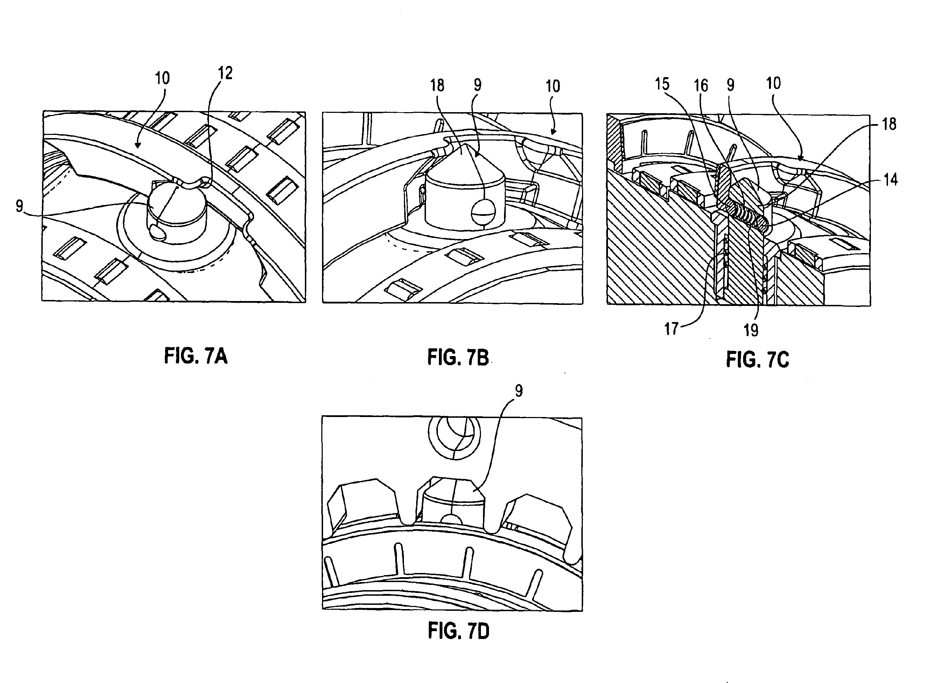

Hierfür weist jedes Schaltelement 9 eine Feder-Kugel-Anordnung auf, die insbesondere aus Fig. 7C ersichtlich ist. Diese Feder-Kugel-Anordnung weist im Beispielsfalle zwei Kugeln 14 und 15 auf, die von einer zwischen den Kugeln angeordneten Druckfeder 16 quer zur Längsachse des Halteelements 9 vorgespannt werden. Die Druckfeder 16 und die Kugel 14 und 15 sind hierfür in einer Querbohrung 19 des Schaltelements 9 angeordnet, wie dies im Einzelnen aus Fig. 7C ersichtlich ist. Das Schaltelement 9 weist ferner an seiner Spitze einen Auflaufkegel 18 auf, der insbesondere aus den Fig. 7A-7C ersichtlich ist.

Fig. 4 verdeutlicht im Einzelnen die Abtriebs- bzw. Schaltwelle 4 mit den Ölkanälen 8 und einer Mehrzahl von Nadellagern, von denen eines repräsentativ für alle Nadellager mit der Bezugsziffer 20 versehen ist.

Ferner wird aus Fig. 4 deutlich, dass üblicherweise eine Mehrzahl von Schaltelementen 9, im Beispielsfalle sechs Schaltelementen, und zugeordneten Synchronringen, vorgesehen ist.

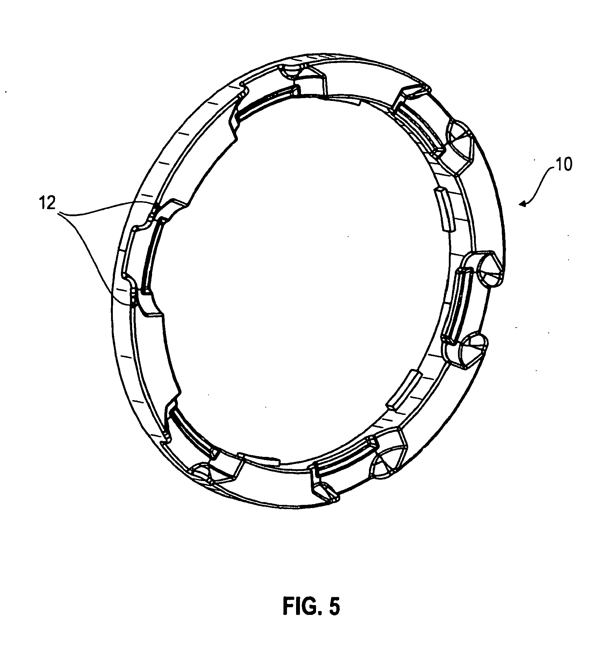

Fig. 5 zeigt einen dieser Synchronringe 10, der Sperrflächen 12 aufweist, die mit den Auflaufkegeln 18 zusammenwirken.

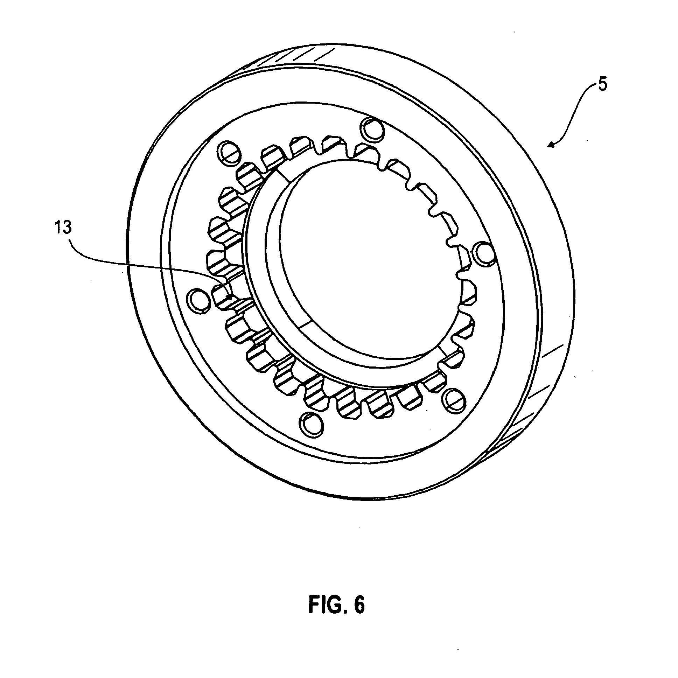

Fig. 6 verdeutlicht ein Schaltrad 5 mit einer innenliegenden Schaltverzahnung 13.

Anhand der Fig. 7A-7C wird der Synchron- bzw. Schaltvorgang verdeutlicht.
Fig. 7A zeigt die Sperrstellung, in der sich der Synchronring 10 im umgeschlagenen Zustand befindet.
Fig. 7B verdeutlicht die Entsperrphase, nach der gemäß Fig. 7C ein Durchschalten und Fig. 7D das Einlegen des Ganges möglich ist, wie sich dies im Einzelnen aus der zeichnerischen Darstellung der Fig. 7A-7D erschließt.

Neben der voranstehenden schriftlichen Offenbarung der Erfindung wird hiermit explizit auf deren zeichnerische Darstellung in den Fig. 1-7D Bezug genommen.

### Bezugszeichenliste

- 1: Hydraulisches Getriebe
- 2: Antriebswelle
- 3: Satz Antriebsräder
- 4: Abtriebs- bzw. Schaltwelle
- 5: Satz Schalträder
- 6: Räderpaarung
- 7: Schaltsystem
- 8: Hydraulik-/Ölkanal
- 9: Schaltelement
- 10: Synchronring
- 11: Reibbelag
- 12: Sperrfläche
- 13: Kupplungsverzahnung
- 14: Kugel
- 15: Kugel
- 16: Druckfeder
- 17: Rückstellfeder
- 18: Auflaufkegel
- 19: Querbohrung
- 20: Nadellager

## Patentansprüche

1. Getriebe (1)
- mit einer Antriebswelle (2), die einen Satz Antriebsräder (3) aufweist;
- mit einer Abtriebswelle (4), die einen Satz Schalträder (5) aufweist, die mit den Antriebsrädern (3) zur Bildung einer schaltbaren Räderpaarung (6) zusammenwirken, und
- mit einem Schaltsystem (7) zur wahlweisen Schaltung eines der Radpaare (6),
- und dass das Schaltsystem (7) folgendes aufweist:
• zumindest einen Hydraulikkanal (8), der in Längsrichtung der Abtriebswelle (4) in dieser verläuft;
• pro Räderpaarung zumindest ein hydraulisch betätigbares Schaltelement (9), das quer zum Hydraulikkanal (8) verschieblich in der Abtriebswelle (4) geführt und **dadurch gekennzeichnet ist, dass** es mit einem der jeweiligen Radpaarung (6) zugeordneten Synchronring (10) zusammenwirkt.

2. Getriebe nach Anspruch 1, **dadurch gekennzeichnet, dass** pro Räderpaarung (6) ein zugeordneter Hydraulikkanal (8) vorgesehen ist.

3. Getriebe nach Anspruch 1 oder 2, **dadurch gekennzeichnet, dass** das jeweilige Schaltelement (9) einen Auflaufkegel (18) aufweist.

4. Getriebe nach einem der Ansprüche 1 bis 3, **dadurch gekennzeichnet, dass** das jeweilige Schaltelement (9) eine Feder-Kugel-Anordnung (14, 15, 16) im Bereich des Auflaufkegels (18) aufweist.

5. Getriebe nach einem der Ansprüche 1 bis 4, **dadurch gekennzeichnet, dass** der Synchronring (10) mit Sperrflächen (12) zum Zusammenwirken mit dem Auflaufkegel (18) des jeweils zugeordneten Schaltelements (9) versehen ist.

6. Getriebe nach einem der Ansprüche 1 bis 5, **dadurch gekennzeichnet, dass** die Schalträder (5) mit einer Kopplungsverzahnung (13) versehen sind.

7. Getriebe nach einem der Ansprüche 1 bis 6, **dadurch gekennzeichnet, dass** das jeweilige Schaltelement (9) mit einer Rückstellfeder (17) zur Vorspannung in die Neutralstellung versehen ist.

## Claims

1. A gearbox (1) comprising
- a drive shaft (2) which includes a set of drive gears (3);
- a driven shaft (4) which includes a set of change gears (5) that cooperate with the drive gears (3) to form a shiftable gear pairing (6); and
- a shift system (7) for selectively shifting one of the gear pairs (6),
- the shift system (7) including:
• at least one hydraulic channel (8) which extends within the driven shaft (4) in the longitudinal direction thereof;
• for each gear pairing, at least one hydraulically actuatable shifting element (9) which is guided for displacement in the driven shaft (4) transversely to the hydraulic channel (8) and **characterized in that** it cooperates with a synchronizer ring (10) associated with the respective gear pairing (6).

2. The gearbox according to claim 1, **characterized in that** one associated hydraulic channel (8) is provided per gear pairing (6).

3. The gearbox according to claim 1 or 2, **characterized in that** the respective shifting element (9) includes a ride-up cone (18).

4. The gearbox according to any of claims 1 to 3, **characterized in that** the respective shifting element (9) includes a spring/ball arrangement (14, 15, 16) in the region of the ride-up cone (18).

5. The gearbox according to any of claims 1 to 4, **characterized in that** the synchronizer ring (10) is provided with locking surfaces (12) for cooperation with the ride-up cone (18) of the respectively associated shifting element (9).

6. The gearbox according to any of claims 1 to 5, **characterized in that** the change gears (5) are provided with a coupling toothing (13).

7. The gearbox according to any of claims 1 to 6, **characterized in that** the respective shifting element (9) is provided with a return spring (17) for pretensioning into the neutral position.

## Revendications

1. Boîte de vitesses (1) comportant
- un arbre d'entraînement (2) qui présente un jeu de roues motrices (3) ;
- un arbre mené (4) qui présente un jeu de roues à rochet (5) qui coopèrent avec les roues motrices (3) pour former une paire de roues (6) commutables, et
- un système de changement de vitesses (7) pour changer sélectivement la vitesse d'une des paires de roues (6),
- le système de changement de vitesses (7) comportant les éléments suivants :
• au moins un canal hydraulique (8) qui s'étend en direction longitudinale de l'arbre mené (4) dans celui-ci ;
• par paire de roues au moins un élément de changement de vitesse (9) hydrauliquement actionnable qui est guidé de manière déplaçable transversalement au canal hydraulique (8) dans l'arbre mené (4) et **caractérisé en ce qu'**il coopère avec une bague de synchronisation (10) associée à la paire de roues (6) respective.

2. Boîte de vitesses selon la revendication 1, **caractérisée en ce qu'**un canal hydraulique (8) associé est prévu pour chaque paire de roues (6).

3. Boîte de vitesses selon la revendication 1 ou 2, **caractérisée en ce que** l'élément de changement de vitesse (9) respectif présente un cône d'introduction (18).

4. Boîte de vitesses selon l'une des revendications 1 à 3, **caractérisée en ce que** l'élément de changement de vitesse (9) respectif présente un agencement à ressort et à bille (14, 15, 16) dans la région du cône d'introduction (18).

5. Boîte de vitesses selon l'une des revendications 1 à 4, **caractérisée en ce que** la bague de synchronisation (10) est pourvue de surfaces de blocage (12) pour coopérer avec le cône d'introduction (18) de l'élément de changement de vitesse (9) respectivement associé.

6. Boîte de vitesses selon l'une des revendications 1 à 5, **caractérisée en ce que** les roues à rochet (5) sont pourvues d'une denture de couplage (13).

7. Boîte de vitesses selon l'une des revendications 1 à 6, **caractérisée en ce que** l'élément de changement de vitesse (9) respectif est pourvu d'un ressort de rappel (17) pour effectuer une précontrainte dans la position neutre.
